# EUROPEAN PATENT APPLICATION

(11) **EP 1 591 382 A1**
(43) Date of publication of application: **02.11.2005**
(21) Application number: 04076296.5
(22) Date of filing: 28.04.2004
(51) Int. Cl.: B65G 17/08

(54) **Inspectable conveyor belt**

(71) Applicant: Ashworth Jonge Poerink B.V., 7547 TC Enschede (NL)
(72) Inventor: Van Faassen, Willem, 7556 LN Hengelo (OV) (NL)
(74) Representative: 't Jong, Bastiaan Jacob

(57) **Abstract**

The invention relates to a conveyor belt comprising a plurality of adjacent conveyor belt elements (1) and a plurality of rods (11) connecting adjacent conveyor belt elements (1), wherein each belt element comprises:
- an elongate body (2) having a support surface;
- first protrusions (3) arranged on a first side of the elongate body and having aligned openings (4);
- second protrusions (5) arranged on a second side opposite of the first side and having aligned openings (6), wherein the first protrusions (3) interlock with second protrusions (5) of an adjacent belt element (1) and a connecting rod (11) extends through the openings (4,6) of the interlocked first (3) and second (5) protrusions,
   wherein
- the protrusions (3,5) are tapered in a direction substantially perpendicular to the support surface and in that at least the openings (4,6) through which the connecting rods (1) extend have at least a main dimension of twice the diameter of the rods (11).

## Description

The invention relates to a conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings, wherein the first protrusions interlock with second protrusions of an adjacent belt element and a connecting rod extends through the openings of the interlocked first and second protrusions.

Such belts are for example used in the food industry as a so called cutting table. Meat is put onto such a conveyor belt and is then cut into pieces for further processing.

Due to regulations and laws it is necessary to clean the belt every 24 hours. In order to clean such a belt correctly it has to be disassembled, such that any decontamination can removed from the conveyor belt. Especially the connection between two conveyor belt elements is difficult to clean. Generally cleaning of a regular cutting table conveyor belt takes several hours.

It is an object to provide a conveyor belt which is easily inspectible and can therefore be easily cleaned.

This object of the invention is solved by a conveyer belt according to the preamble, which is characterized in that the protrusions are tapered in a direction substantially perpendicular to the support surface and in that at least the openings through which the connection rods extend have at least a main dimension of twice the diameter of the rods.

As a result of these features two conveyor belt elements can be displaced relative to each other in a transverse direction, when the belt elements are tilted relative to each other. The tapered protrusions provide this additional space when the conveyor belt elements are tilted, which enables the possibility to shift the belt elements.

Additionally the enlarged openings in the protrusions make it possible to shift the rods within the openings and in combination with the transverse movement of the conveyor belt elements all sides of a conveyor belt element can be inspected and subsequently be cleaned.

In a preferred embodiment of the invention the openings of the protrusions are dimensioned such that the openings in the protrusions of two interlocked adjacent and lined out elements provide in the longitudinal direction of the rod a continuous opening having a diameter substantially equal to the diameter of the rod.

With such an arrangement the rod is fixed in the openings when two belt elements are in line with each other and in which the support surfaces are in a mutual plane. Only when the two belt elements are tilted relatively to each other the enlarged dimensions of the openings enable the rod to shift within the openings and relative to the two related belt elements.

In another embodiment of the invention the belt elements have a substantially uniform thickness. This is of benefit when manufacturing such belt elements. Having an uniform thickness results in an even cooling down of the belt element after injection moulding.

In yet another embodiment the openings in the outer protrusions are substantial equal to the cross sectional rods. So after the rods are inserted into the belt elements they can shift freely in the enlarged openings, but due to the openings and the outer protrusions being substantially equal to the cross section of the rod the rods cannot accidentally shift out of the belt elements.

In still another embodiment the support surface of a belt element is a closed surface. Such a surface is of advantage for cutting tables.

These and other advantages will be elucidated in conjunction with the accompanying drawings.

Figure 1 shows a perspective top view of a belt element according to the invention.

Figure 2 shows a bottom perspective view of the belt element according to figure 1.

Figure 3 shows a side view of the belt element according to figure 1.

Figure 4 shows a perspective view of an embodiment of a conveyor belt according to the invention with belt elements according to figure 1.

Figures 5A-5E show a cross sectional view along the line V-V in figure 4 in different positions.

Figure 6 shows a bottom perspective view of the conveyor belt according to figure 4 in the position corresponding to the cross sectional view of figure 5F.

Figure 7 shows a perspective view of the conveyor belt according to figure 4.

Figure 8 shows a side view of the conveyor belt according to figure 7.

Figure 9 shows a top view of another embodiment of a conveyor belt according to the invention

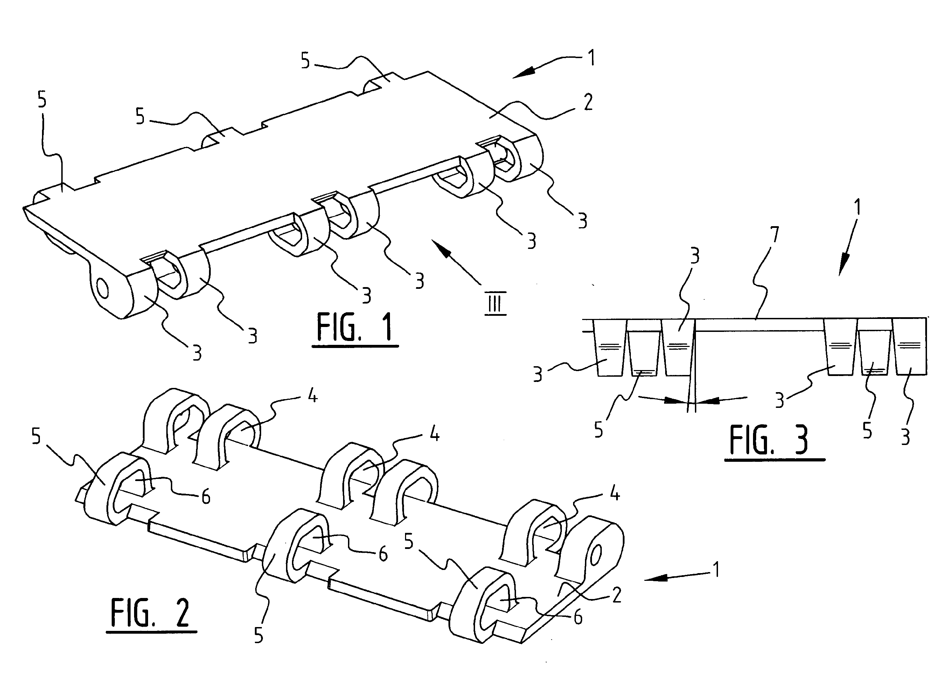

Figure 1 shows a conveyor belt element 1 according to the invention having an elongate body 2 with a closed top support surface. On a first side of the elongate body 2 first protrusions 3 are arranged. These protrusions 3 have openings 4.

On the opposite side of the elongate body 2 second protrusions 5 are arranged having also openings 6.

As is clear from figure 3 the protrusions 3 and 5 taper in a direction substantially perpendicular to the support surface 7.

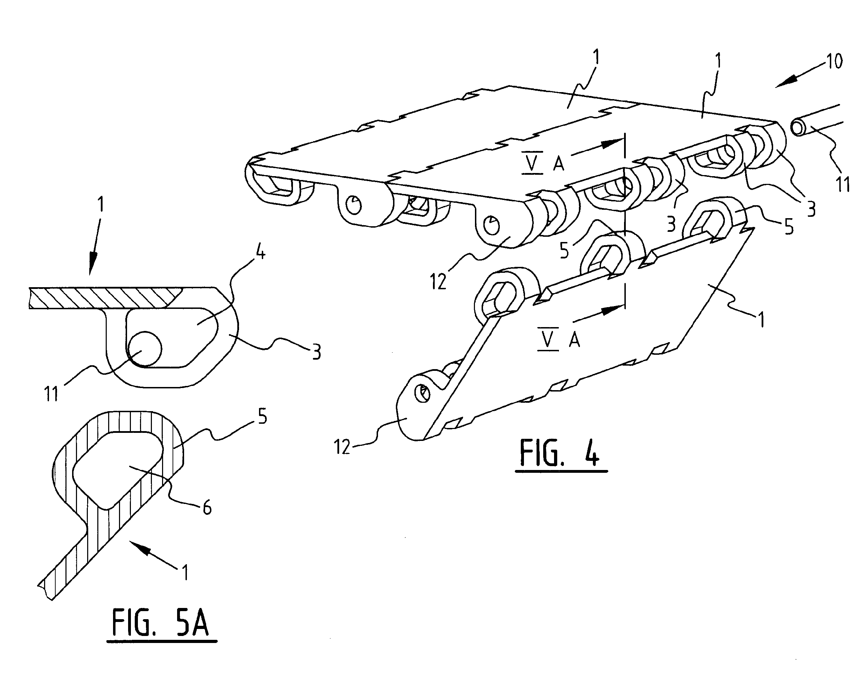

In figure 4 a conveyor belt 10 is shown, which is composed out of a number of belt elements 1. The first protrusions 3 interlock with the second protrusions 5 of an adjacent belt element 1. The adjacent belt elements 1 are connected by a rod 11, which extends through the openings 4 and 6 of the first and second protrusions 3, 5.

The outer protrusions 12 have an opening, which substantially corresponds to the cross section of the rod 11. When the rod 11 is inserted it can shift freely in the enlarged openings of the first and second protrusions 3, 5, but due to the restricted openings in the outer protrusions 12 the rod 11 cannot shift out of the belt elements.

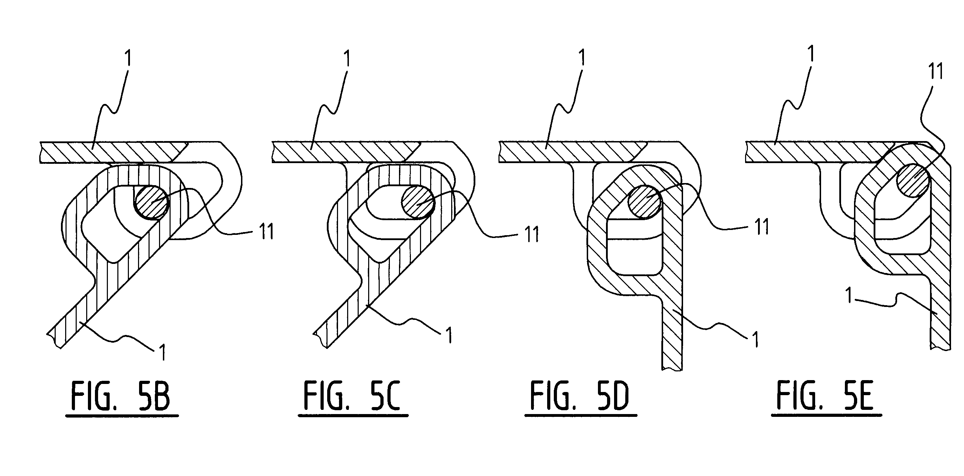

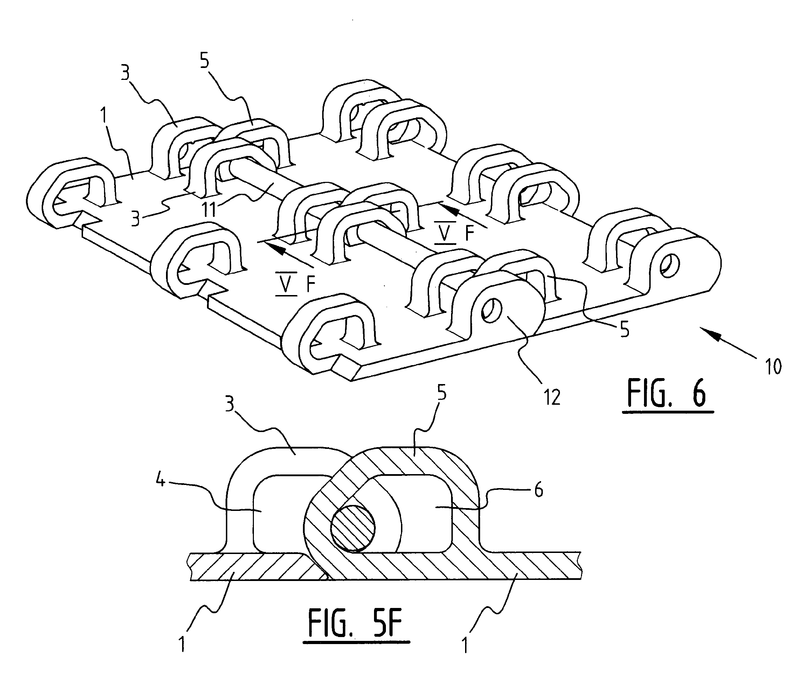

In figures 5A through 5E a cross sectional view of two belt elements 1 is shown. The openings 4, 6 in the protrusions 3 respectively 5 are relatively large with respect to the cross section of the rod 11. The main dimensions of these openings are almost identical or larger than twice the diameter of the rod 11. In figures 5B through 5E it is shown that when the belt elements 1 are tilted relative to each other the belt elements can move in all directions, such that the connection between the two belt elements 1 around the protrusions 3, 5 can be inspected and if necessary be cleaned. In figure 6 the belt elements 1 are in line with each other. The belt elements 1 are connected through the rod 11, which extends to the protrusions 3 and 5.

In figure 5F a cross sectional view is shown taken along the line V-V in figure 6. It is clear that in the position shown in figure 6 the openings 4 and 6 in the protrusions 3 and 5 provide in the longitudinal direction of the rod 11 a continuous opening having a diameter substantially equal to the diameter of the rod 11. Due to this arrangement the rod 11 is fixed and cannot shift within the openings 4 and 6. Only when the belt elements 1 are tilted relative to each other the freedom of movement shown in figures SB-5E is possible.

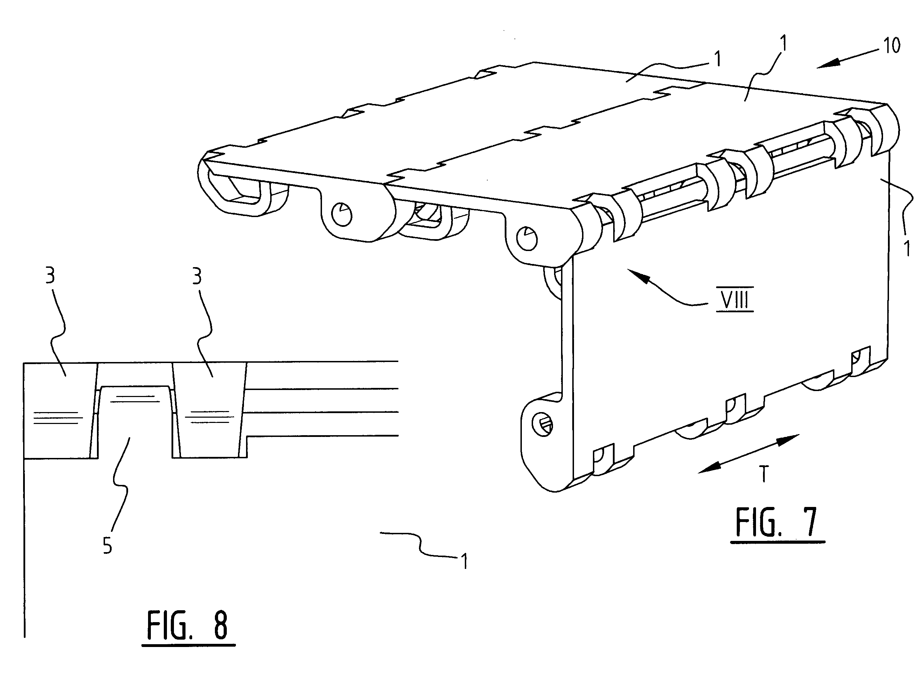

In figure 7 the conveyor belt 10 is again shown, wherein one belt element 1 is tilted over 90° relative to the adjacent belt element 1. In figure 8 a side view of the belt element 10 according to figure 7 is shown. It is clear that in this position the belt elements 1 can shift in a transverse direction T due to the tapered shape of the protrusions 3 and 5. In combination with the freedom of the rod 11 within the openings 4 and 6 this belt 10 can be quickly inspected and thoroughly cleaned.

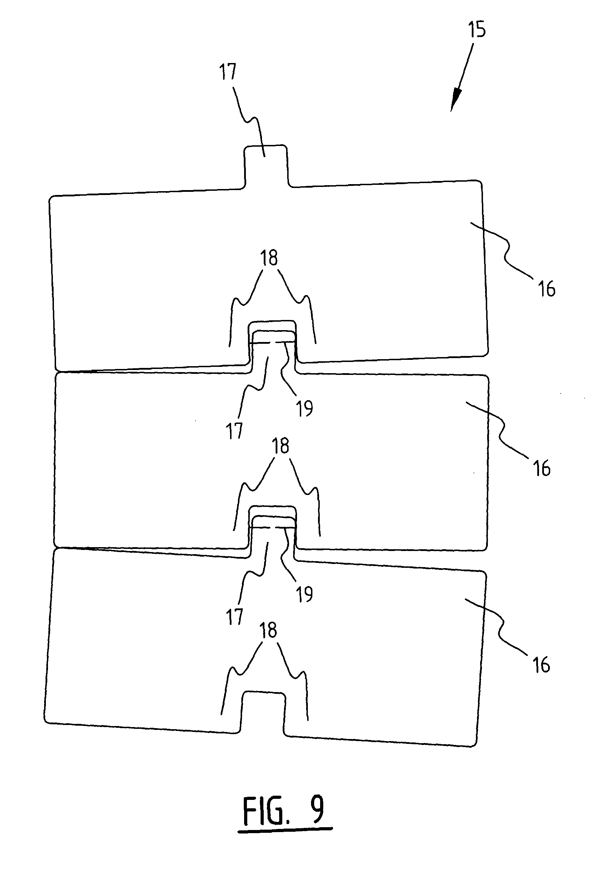

Figure 9 shows a further embodiment of a conveyor belt 15 according to the invention. The conveyor belt 15 has belt elements 16 each having a first protrusion 17 and two second protrusions 18, which are integral with the flat top surface of the belt elements 16.

The adjacent belt elements 16 are connected by a rod 19. This rod 19 is loosely arranged in slot like holes in the protrusions 17, 18 similar to the previous described embodiments of the invention.

## Claims

1. Conveyor belt comprising a plurality of adjacent conveyor belt elements and a plurality of rods connecting adjacent conveyor belt elements, wherein each belt element comprises:
- an elongate body having a support surface;
- first protrusions arranged on a first side of the elongate body and having aligned openings;
- second protrusions arranged on a second side opposite of the first side and having aligned openings, wherein the first protrusions interlock with second protrusions of an adjacent belt element and a connecting rod extends through the openings of the interlocked first and second protrusions,
**characterized in that**
the protrusions are tapered in a direction substantially perpendicular to the support surface and **in that** at least the openings through which the connecting rods extend have at least a main dimension of twice the diameter of the rods.

2. Conveyor belt according to claim 1, wherein the openings of the protrusions are dimensioned such that the openings in the protrusions of two interlocked adjacent and aligned belt elements provide in the longitudinal direction of the rod a continuous opening having a diameter substantially equal to the diameter of the rod.

3. Conveyor belt according to claim 1 or 2, wherein the belt elements are monolithic plastic elements.

4. Conveyor belt according to claim 3, wherein the belt elements have a substantially uniform thickness.

5. Conveyor belt according to any of the preceding claims, wherein the openings in the outer protrusions are substantially equal to the cross-section of the rods.

6. Conveyor belt according to any of the preceding claims, wherein the support surface is a closed surface.
